(19) **Europäisches Patentamt**
**European Patent Office**
**Office européen des brevets**

(11) **EP 1 482 749 B1**

(12) **EUROPEAN PATENT SPECIFICATION**

(45) Date of publication and mention
of the grant of the patent:
**25.07.2007 Bulletin 2007/30**

(51) Int Cl.:
*H04Q 7/36* (2006.01)

(21) Application number: **03076639.8**

(22) Date of filing: **28.05.2003**

(54) **Method and system for planning and evaluation of radio networks**

Verfahren und Vorrichtung zur Planung und Bewertung in Funknetzen

Procédé et système pour la planification et l'évaluation dans des réseaux radio

(84) Designated Contracting States:
**AT BE BG CH CY CZ DE DK EE ES FI FR GB GR HU IE IT LI LU MC NL PT RO SE SI SK TR**

(43) Date of publication of application:
**01.12.2004 Bulletin 2004/49**

(73) Proprietor: **Koninklijke KPN N.V.**
**9726 AE Groningen (NL)**

(72) Inventors:
• **Amft, Sascha**
**40591 Düsseldorf (DE)**
• **Okdemir, Sinan**
**40233 Düsseldorf (DE)**
• **Ricker, Volker**
**41464 Neuss (DE)**

(74) Representative: **Wuyts, Koenraad Maria et al**
**Koninklijke KPN N.V.,**
**Intellectual Property Group,**
**P.O. Box 95321**
**2509 CH Den Haag (NL)**

(56) References cited:
**US-A1- 2001 041 565**

• **MENOLASCINO R. ET A.: "STORMS: Software Tools for the Optimisation of Resources in Mobile Systems" ADVANCED COMMUNICATIONS TECHNOLOGIES AND SERVICES, [Online] April 1999 (1999-04), pages 1-58, XP002256554 Retrieved from the Internet: <URL:ftp: //ftp.cordis.lu/pub/infowin/docs/ fr-016.pdf> [retrieved on 2003-10-02]**
• **GRASSO S M ET AL: "DEMON: A FORECASTING TOOL FOR DEMAND EVALUATION OF MOBILE NETWORK RESOURCES" TECHNICAL REPORTS - CSELT, TURIN, IT, vol. 25, no. 2, April 1997 (1997-04), pages 257-266, XP008011474 ISSN: 0393-2648**
• **PIZARROSO M. ET AL.: "Radio Coverage Prediction and Frequency Allocation Optimization" COMUNICACIONES I+D, [Online] no. 15, December 1997 (1997-12), pages 62-77, XP002256555 Retrieved from the Internet: <URL: http://www.tid.es/presencia/publicaci ones/ comsid/ing/articulos/vol812/radio/rad io.html> [retrieved on 2003-09-30]**

## Description

<u>Field of the invention</u>

The invention relates to planning and evaluation of radio networks. More specifically the invention relates to optimizing coverage in existing radio networks and prioritizing placement of base stations.

<u>Background of the invention</u>

Radio network planning and evaluation is used to find gaps in radio coverage and to find the location where to build a new base station.

WO90/10342 provides a method and a system for planning of radio cells. It utilizes an exclusion matrix calculated on the basis of measured field strengths and an iterative allocating algorithm, which allows an adaptation of the cell planning to prevail traffic demand.

WO96/36188 provides a method of and a device for estimating system requirements of a radio telecommunication network.

EP1294208 provides a method and system for the planning and/or evaluation of radio networks, especially CDMA radio networks. It takes into account cell breathing due to traffic changes and therefore the planning involves the calculation of a link budget for each pixel and of a noise rise for each cell.

WO93/15591 provides a method and a system for planning a cellular radio network using simulations for subscriber mobility.

The document "Software tools for the optimization of resources in mobile systems" of the STORMS project (downloadable form ftp://ftp.cordis.lu/pub/infowin/docs/fr-016.pdf) describes a suit o software tools addressed to the UMTS planning using a pixel model.

<u>Problem definition</u>

There are no solutions for the planning and evaluation in existing radio networks that need coverage improvement, where the solution prioritizes the roll-out of base stations to improve coverage as perceived by the end-users.

<u>Aim of the invention</u>

The aim of the invention is to provide a method and system for the planning and evaluation in existing radio networks that need coverage improvement, where the solution prioritizes the roll-out of base stations to improve coverage as perceived by the end-users.

<u>Summary of the invention</u>

The present invention provides a solution for planning and evaluation in existing radio networks that need coverage improvement, where the solution can prioritize the roll-out of base stations to improve coverage as perceived by the end-users.

According to an aspect of the invention a method and system are provided for the planning and/or evaluation of a radio network, the radio network comprising at least one base station defining at least one cell. The method can comprise the following steps or a subset of the following steps, where the system comprises means to handle these steps:

- Dividing at least part of at least one service area into pixels.
- Identifying at least one uncovered pixel by evaluating whether or not the at least one of the pixels is covered by the at least one cell. A coverage prediction model and a population distribution model can be used for this. A measured coverage data and a population distribution model can be used for this. A coverage prediction model and an environment characteristics model can be used for this. A measured coverage data and an environment characteristics model can be used for this.
- Weighing the at least one uncovered pixel.
- Determining a sum of new covered pixels by virtually placing a new base station on the at least one uncovered pixel. The sum of new covered pixels can be a weighed sum of new covered pixels.
- Determining at least one candidate pixel. This can be done by selecting the at least one uncovered pixel for which the sum of new covered pixels is highest. The selecting the at least one uncovered pixel can evaluate whether or not the sum of new covered pixels is above a threshold value.
- Determining whether or not there are two or more adjacent candidate pixels.

- Defining an adjacent pixels area.
- Determining a center of gravity of the adjacent pixels area.
- Identifying at least one already covered pixel in an living area surrounding the at least one uncovered pixel by evaluating whether or not the at least one already covered pixel is covered by the at least one cell;
- Determining for the at least one uncovered pixel a sum of already covered pixels in the living area surrounding the at least one uncovered pixel.
- Determining for the at least one uncovered pixel a new sum of covered pixels in the living area surrounding the at least one uncovered pixel, after virtually placing the new base station on the at least one uncovered pixel;
- Prioritizing the at least one candidate pixel by evaluating the difference between the sum of already covered pixels in the living area surrounding the at least one uncovered pixel and the new sum of covered pixels in the living area surrounding the at least one uncovered pixel, after virtually placing a new base station on the at least one uncovered pixel.

A real base station can be placed on the candidate pixel. A real base station can also be placed on the center of gravity of the adjacent pixels area.

Brief description of the drawings

The invention will be explained in greater detail by reference to exemplary embodiments shown in the drawings, in which:

Fig.1 shows a flowchart of the planning and evaluation of the radio network according to an exemplary embodiment of the invention.
Fig.2 shows a sub-result of the planning and evaluation of the radio network according to an exemplary embodiment of the invention.
Fig.3 shows another sub-result of the planning and evaluation of the radio network according to an exemplary embodiment of the invention.
Fig.4 shows another sub-result of the planning and evaluation of the radio network according to an exemplary embodiment of the invention.
Fig.5 shows another sub-result of the planning and evaluation of the radio network according to an exemplary embodiment of the invention.
Fig.6 shows another sub-result of the planning and evaluation of the radio network according to an exemplary embodiment of the invention.
Fig.7 shows another sub-result of the planning and evaluation of the radio network according to an exemplary embodiment of the invention.
Fig.8 shows another sub-result of the planning and evaluation of the radio network according to an exemplary embodiment of the invention.

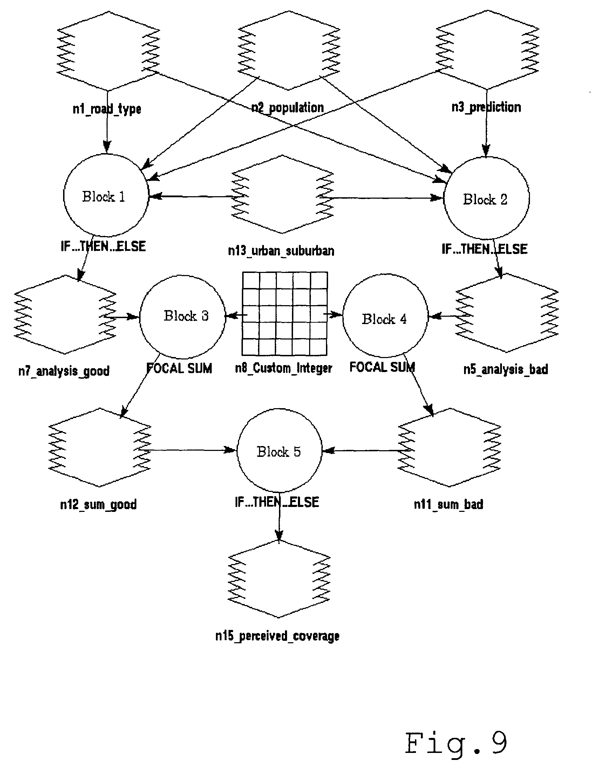

Fig.9 shows a flowchart used for a prioritization in the planning and evaluation the radio network according to an exemplary embodiment of the invention.

Detailed description of the invention

For the purpose of teaching of the invention, preferred embodiments of the method and system of the invention are described in the sequel. It will be apparent to the person skilled in the art that other alternative and equivalent embodiments of the invention can be conceived and reduced to practice without departing from the invention, the scope of the invention being only limited by the claims as finally granted.

**Preferred embodiment**

The planning and evaluation process described here allows the generation of a countrywide radio network planning within relatively short periods of time. Depending on the accuracy and actuality of the input data in use, the quality of the planning and evaluation output can be reasonably high. A key input is up-to-date data about the population distribution. With the knowledge of local or regional varieties in age, mobility, education or purchasing power the model can be further tuned.

*Planning for indoor coverage*

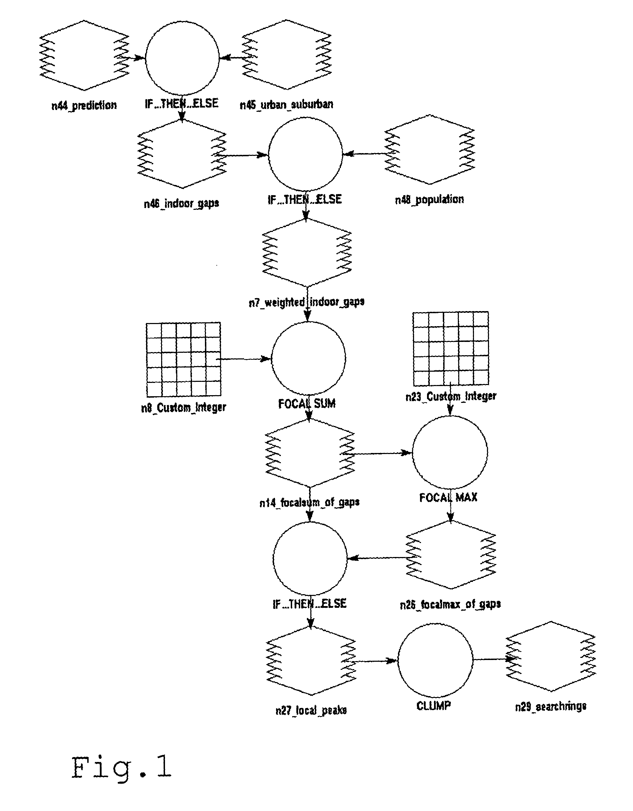

Fig.1 shows a flow chart of the planning approach. The calculation uses the commercially available software product ERDAS Imagine®, which is a widely used tool for raster processing. By use of this tool, a raster array representing the predicted or measured current coverage situation is combined with the population distribution in order to find accumulations of uncovered population within the reach of a potential base station. All steps of the model will be discussed in detail.

The analysis is performed using a raster size of 100x100m. Higher resolution would increase data volumes and processing time to unacceptable levels.

Step 1 (3): The functional building block 1 identifies raster pixel which are currently uncovered at the respective field strength threshold by combining the field strength raster n_44_prediction (1) with the clutter classes "urban", "suburban" and "rural" n45_urban_suburban (2), as the radio wave propagation and likewise a potential base station's range depends on the building density. The applied thresholds could be for example:

- 65 dBm for urban area
- 72 dBm for suburban and rural area resulting in a 1bit-raster n46_indoor_gaps (4) with pixel value "1" representing uncovered areas and "0" depicting covered areas.

```
EITHER 1
IF (       (n45_urban_suburban==1 and n44_prediction<-72dBm)
or (       n45_urban_suburban!=1 and n_44prediction<-65dBm))
OR 0 OTHERWISE
```

Step 2 (6): Building block 2 weights the result with the number of inhabitants per pixel n48_population (5). The algorithm uses the maximum of daytime and nighttime population on a pixel level, i.e. pure residential areas are counted mostly with their nighttime inhabitants while industrial park areas are valued with their daytime population. Thus the accumulated, nationwide figure exceeds the real country's number of inhabitants, as commuters may be counted twice. The resulting 8bit-raster n7_weighted_indoor_gaps (7) indicates the number of inhabitants if the pixel is uncovered, otherwise "0".

```
EITHER     n48_population
IF (       (n46_indoor_gaps==1)
OR 0 OTHERWISE
```

Step 3 (9): Based on the assumption of a base station's range of 500m, step 3 sums - for each pixel - all uncovered population that is located within that range (i.e. within a range of 5 pixel). The coverage area is approximated a being circular. It thus simulated - for each pixel - how many population could be covered if the BTS would be placed right there. The resulting raster n4_focalsum_of_gaps (10) has an information depth of 16 bit.

```
FOCAL SUM ( n7_weighted_indoor_gaps , n8_Custom_Integer )
```

Steps 4: At this point, the optimal strategy to find the most efficient base station locations would be to identify the pixel having the absolute maximum value in n14_focalsum_of_gaps (10), assume a BTS being placed there, calculate a field strength prediction and restart from step 1. The approach, however, is not realistic as for a nationwide planning as processing time would be unacceptable. Instead, the automated planning approach is aimed to find local maximums, i.e. location with a maximum number of populations within coverage range, by choosing - pixel per pixel - the maximum value from n14_focalsum_of_gaps (10) in 500m neighborhood. A local maximum requires the current pixel value to be equal to the maximum pixel value in 500m perimeter. As a second condition, a local maximum is taken into account only if a particular threshold (i.e. a particular number of inhabitants to be covered by that BTS candidate) is exceeded. These two block 4 and 5 result in a 16bit unsigned raster n27_local_peaks (15) where all pixel that fulfill the two conditions carry the population in 500m neighborhood, all others hold the value "0".

Block 4 (12):

FOCAL MAX ( n14_focalsum_of_gaps, n23_Custom_Integer)

The ERDAS build-in function "FOCAL MAX" returns the maximum of the pixel values in the focal window (focus) around each pixel of the input raster. The focus is defined by a customized 11x11 matrix n23_Custom_Integer (11) shaped like a circle as depicted below:

$$n23\_Custom\_Integer = \begin{vmatrix} 0 & 0 & 0 & 0 & 0 & 1 & 0 & 0 & 0 & 0 & 0 \\ 0 & 0 & 0 & 1 & 1 & 1 & 1 & 1 & 0 & 0 & 0 \\ 0 & 0 & 1 & 1 & 1 & 1 & 1 & 1 & 1 & 0 & 0 \\ 0 & 1 & 1 & 1 & 1 & 1 & 1 & 1 & 1 & 1 & 0 \\ 0 & 1 & 1 & 1 & 1 & 1 & 1 & 1 & 1 & 1 & 0 \\ 1 & 1 & 1 & 1 & 1 & 1 & 1 & 1 & 1 & 1 & 1 \\ 0 & 1 & 1 & 1 & 1 & 1 & 1 & 1 & 1 & 1 & 0 \\ 0 & 1 & 1 & 1 & 1 & 1 & 1 & 1 & 1 & 1 & 0 \\ 0 & 0 & 1 & 1 & 1 & 1 & 1 & 1 & 1 & 0 & 0 \\ 0 & 0 & 0 & 1 & 1 & 1 & 1 & 1 & 0 & 0 & 0 \\ 0 & 0 & 0 & 0 & 0 & 1 & 0 & 0 & 0 & 0 & 0 \end{vmatrix}$$

Block 5 (14):

```
EITHER    n14_focalsum_of_gaps
          IF ( n14_focalsum_of_gaps==n26_focalmax_of_gaps
and
          n14_focalsum_of_gaps>1500)
OR 0 OTHERWISE
```

As the local maximum might consist of more than one pixel, i.e. more than one raster dot fulfilling the conditions mentioned above where only one potential base station would have to be placed, the following block does a grouping of adjacent pixel. The corresponding function is called "CLUMP" (16) and performs a contiguity analysis of the raster n27_local_peaks (15) where each separate raster region / clump is recoded to a separate class. The output is the single layer raster n_29_searchrings (17) in which the contiguous areas are numbered sequentially.
The function CLUMP (16) takes 8 neighboring pixel into account as shown below.

Block 6 (16):

CLUMP ( n27_local_peaks, 8 )

The resulting 32-bit raster n29_searchrings (17) contains for each clump the consecutive number as well as the weight (here the amount of population related to a potential BTS). The more pixel belonging to a particular class, the larger is the tolerance area in which to place the BTS.

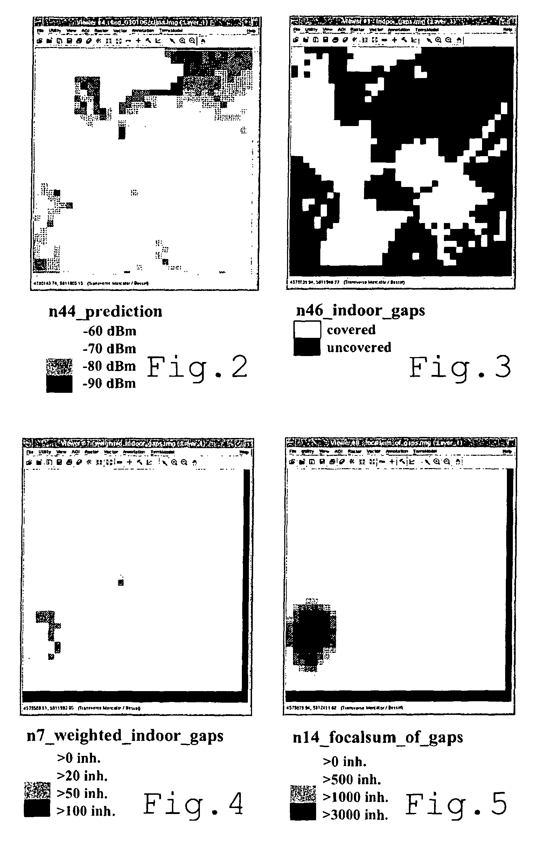

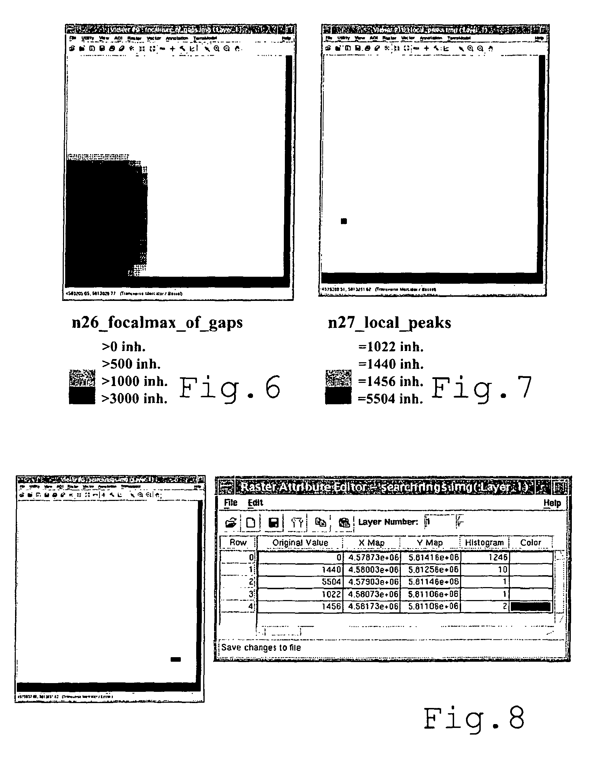

Fig.2, Fig.3, Fig.4, Fig.5, Fig.6 and Fig.7 display the step-by-step results for an area of 3 km x 3.5 km in the center of Berlin. In this example, there are 4 new BTS locations found. The output of block 6 (16) "CLUMP" results in the raster as displayed in Fig.8. The four potential BTS locations are numbered sequentially (column "row") and carrying the value of the population to be covered (column "Original Value"). According to the automated planning, the BTS candidate 1 could be placed anywhere within the yellow region while still covering the calculated amount of 1440 inhabitants.

As the approach described above cannot guarantee a minimum inter-site distance, the next step can be to delete all candidates with a distance less than the coverage range from the BTS list. Therefore the programming language "C" is used:

As the applied coordinate system is Transverse Mercator (Gauss-Kruger, where in the close-up range a rectangular grid is applied, site dis-tances in the close neighborhood can -with an acceptable inaccuracy - be calculated following Pythagoras theorem as

$$\sqrt{(X_{site1} - X_{site2})^2 + (Y_{site1} - Y_{site2})^2}$$

In order to improve the quality of the process, the steps described above are repeated to up to 3 iterations. Therefore the attainable coverage is simulated with a set of BTS consisting of all BTS on air plus the set of BTS candidates to be built.

## *Planning for road coverage*

The high-level approach for road coverage planning resembles the one applied for indoor coverage. The field strength thresholds and minimum coverage requirements as well as assumed BTS coverage range are adjusted. The model starts with raster-oriented measurement data, e.g. on highways and important other roads. The 8-bit raster n1_measurement_campaign (1) represents the measured field strength anywhere drive tests took place or "0" otherwise. Block 1 (3) marks those pixel, where a field strength level to be defined is not exceeded, with "1" if highway or "2" if other road (n17_road_type (2)). Highways and other road can be given distinctive threshold values to account for their different importance.

Block 1 (3):

```
EITHER 1
IF ( n17_road_type=="HIGHWAY" 1 && n1_measurement_campaign<-98dBm)
OR ( EITHER 2
                        IF ( n17_road_type=="OTHER_ROAD" and
                        n1_measurement_campaign<-100dBm)
                        OR 0 OTHERWISE )
OTHERWISE
```

The resulting raster2-bit raster is used as input for a focal analysis. As the field strength requirement differ from the indoor approach, the assumed coverage range differs as well. A coverage zone can be deduced from Okumura-Hata theorem as 3000m. Based on this range, block 2 (9) sums - for each pixel - all uncovered and weighted (1 or 2) road segments that are located within that area (i.e. within a range of 30 pixel). The coverage area is approximated a being circular. It thus simulated - for each pixel - what road section could be covered if the BTS would be placed right there. The resulting raster n4_focalsum_highways (10) has an information depth of 16 bit.

Block 2 (9):

```
FOCAL SUM ( n13_no_incar_coverage, n3_Custom_Integer)
```

Blocks 3 and 4 are aimed to find local maximums, i.e. location with a maximum number of uncovered road pixel within coverage range, by choosing - pixel per pixel - the maximum value from n4_focalsum_highways (10) in a 3000m neighborhood. A local maximum requires the current pixel value to be equal to the maximum pixel value in 3000m perimeter. As a second condition, a local maximum is taken into account only if a particular threshold (i.e. a particular segment length) is exceeded. These two blocks result in a 16bit unsigned raster n8_local_peaks (15) where all pixel that fulfill the two conditions are assigned the number of uncovered pixel in 3000m neighborhood, all others carry the value "0".

Block 4 (12):

FOCAL MAX ( n4_focalsum_highways, n9_Custom_Integer)

Block 4 returns the maximum of the pixel values in the focal window (focus) around each pixel of the input raster. The focus is defined by a customized 61x61 matrix n9_Custom_Integer (11) shaped like a circle.

Block 3 (14):

EITHER n4_focalsum_highway
            IF ( n4_focalsum_highways==n5_focalmax_highways
and
            n14_focalsum_highways>20)
OR 0 OTHERWISE

The threshold of 20 pixel that has to be exceeded to justify a BTS corresponds to either 10 pixel on highway or 20 pixel on other roads or any combination of that.

The final block 5 (16) does a grouping of adjacent pixel by use of the function "CLUMP", performing a contiguity analysis on the raster n8_local_peaks (15). Each separate raster region / clump is recoded to a separate class. The output is the single layer raster n_11_searchrings (17) in which the contiguous areas are numbered sequentially.

Block 5:

CLUMP ( n8_local_peaks , 8)

The resulting 32-bit raster n11_searchrings (17) contains - for each clump - the consecutive number as well as the weight (i.e. the number of road pixel related to a potential BTS). The tolerance area in which to place the BTS is larger the more pixel belong to the corresponding class.

The resulting set of BTS candidates for road coverage improvement is checked for a minimum inter site distance between each other as well as between road and indoor BTS and - if needed - cleared. Two or more iterations provide an improved planning quality.

### *Rollout prioritization for new BTS locations*

Experience taught that coverage plots denoting the covered area at a field strength of -95 dBm do not reflect the customers' perception. An average customer is not only interested in coverage at home but is moving and therefore also wants to use his cell phone in the surrounding area. Besides, uninhabited areas such as forest and countryside do also not play a major role in a customer's quality perception. Thus, an alternative approach to describe network coverage has to assume a mobile customer and focus on settled regions only.

The measure "Perceived Coverage" fulfills this requirements as it is calculated as follows: For each raster pixel the model calculates a percentage of covered pixel in a 20 km perimeter, as this is the area in which an average customer usually moves. To be counted as covered, the predicted field strength at a particular pixel has to exceed

- 60 dBm in urban areas
- 70 dBm in suburban and rural areas
- 85 dBm on main roads and BAB (highways).

Unpopulated pixel (forest, agricultural areas, watercourses) are not taken into consideration. "Perceived Coverage" better represents the customers' impression by putting higher weight on areas, where a mobile phone is normally used.

The raster layer "Perceived Coverage" is calculated as follows:

Block 104 marks all relevant pixel , i.e. those fulfilling the field strength conditions, as covered (value: "1"), all others (not covered or not relevant as countryside) are given the value "0". The inverted analysis is performed in Block 106, where all uncovered but relevant pixel are marked "1", all others (covered or irrelevant) are assigned the value "0".

Block 104:

```
EITHER 1
        IF ((  n1_road_type (101) > 0 AND n3_prediction (103)
                >= -86dBm) OR
           (  n2_population (102) > 0 AND
                            (n3_prediction (103) >= -60dBm OR
                             n3_prediction (103)>= -70dBm AND
n13_urban_suburban (105)!=1))))
OR 0 OTHERWISE
```

Block 106:

```
EITHER 1
        IF ((  n1_road_type (101) > 0 AND n3_prediction (103)
                >-86dBm) OR
           (  n2_population (102) > 0 AND
                            (n3_prediction (103) < -70dBm OR
                             n3_prediction (103) < -60dBm AND
n13_urban_suburban (105)==1))))
OR 0 OTHERWISE
```

The resulting 1-bit raster n7_analysis_good (107) and n5_analysis_bad (111) are input to blocks 108 and 110 where all good (block 108) respectively all bad (block 110) pixel within the focal window are counted. The focus has a circular shape with radius 2000 pixel, representing the 20 km mobility radius. The output raster have an information depth of 16 bit unsigned and provide information about the number of good respectively bad pixel in a 20 km perimeter.

Block 108:

```
FOCAL SUM(n7_analysis_good (107),n8_Custom_Integer (109))
```

Block 110:

```
FOCAL SUM (n5_analysis_bad (111),n8_Custom_Integer (109))
```

The final step is to compute - for each pixel - the ratio of good and bad pixel in the neighborhood. The resulting 8-bit raster n15_perceived_coverage (115) is assigned a value between 0 and 100, representing the percentage of good pixel in relation to the total number of relevant pixel and therewith the "Perceived Coverage".

Block 113:

```
EITHER
INTEGER ( 100 * FLOAT ( n12_sum_good (112)) /
                    FLOAT ( n12_sum_good (112)+ n11_sum_bad (114) ))
IF ( n12_sum_good (112)+ n11_sum_bad (114) > 0 )
OR 0 OTHERWISE
```

Mapping the possible increase in perceived coverage on the found new base station locations for indoor and road coverage shows which new base stations have the highest impact on perceived coverage. The new base stations with highest impact can be build first. Such for all new base station locations a priority can be given.

**Claims**

1. Method for the planning and/or evaluation of a radio network, the radio network comprising at least one base station defining at least one cell, the method comprising the steps of
dividing at least part of at least one service area into pixels;
identifying at least one uncovered pixel by evaluating whether or not the at least one of the pixels is covered by the at least one cell;
determining a sum of a population of new covered pixels by virtually placing a new base station on the at least one uncovered pixel;
determining at least one candidate pixel selected from the at least one uncovered pixel for placing the new base station.
   **characterized in that**
   said method further comprises the steps of:

   identifying at least one already covered pixel in a living area surrounding the at least one uncovered pixel by evaluating whether or not the at least one already covered pixel is covered by the at least one cell;
   determining for the at least one uncovered pixel an amount of already covered pixels in the living area surrounding the at least one uncovered pixel;
   determining for the at least one uncovered pixel a new amount of covered pixels in the living area surrounding the at least one uncovered pixel, after virtually placing the new base station on the at least one uncovered pixel;
   prioritizing the at least one candidate pixel by evaluating the difference between:

      the amount of already covered pixels in the living
      area surrounding the at least one uncovered pixel and
      the new amount of covered pixels in the living area surrounding the at least one uncovered pixel, after
      virtually placing a new base station on the at least one uncovered pixel.

2. Method according to claim 1 in which the step of identifying at least one uncovered pixel uses a coverage prediction model and a population distribution model.

3. Method according to claim 1 in which the step of identifying at least one uncovered pixel uses a measured coverage data and a population distribution model.

4. Method according to claim 1 in which the step of identifying at least one uncovered pixel uses a coverage prediction model and an environment characteristics model.

5. Method according to claim 1 in which the step of identifying at least one uncovered pixel uses a measured coverage data and an environment characteristics model.

6. Method according to claims 1-5 in which the method further comprises the step of
weighing the at least one uncovered pixel;
and the sum of the population of the new covered pixels is a weighed sum of new covered pixels.

7. Method according to claims 1-6 in which the step of determining the at least one candidate pixel is performed by selecting the at least one uncovered pixel for which the sum of the population of the new covered pixels is highest.

8. Method according to claim 7 in which the selecting the at least one uncovered pixel evaluates whether or not the sum of the population of the new covered pixels is above a threshold value.

9. Method according to any of the claims 1-8 in which the method further comprises the step of placing a real base station on the candidate pixel.

10. System for the planning and/or evaluation of a radio network, the radio network comprising at least one base station defining at least one cell, the system comprising
means for dividing at least part of at least one service area into pixels;
means for identifying at least one uncovered pixel by evaluating whether or not the at least one of the pixels is covered by the at least one cell;
means for determining a sum of a population of new covered pixels by virtually placing a new base station on the at least one uncovered pixel;
means for determining at least one candidate pixel selected from the at least one uncovered pixel for placing the new base station..
**characterized by**
means for identifying at least one already covered pixel in a living area surrounding the at least one uncovered pixel and means for evaluating whether or not the at least one already covered pixel is covered by the at least one cell;
means for determining for the at least one uncovered pixel an amount of already covered pixels in the living area surrounding the at least one uncovered pixel;
means for determining for the at least one uncovered pixel a new amount of covered pixels in the living area surrounding the at least one uncovered pixel, after virtually placing the new base station on the at least one uncovered pixel;
means for prioritizing the at least one candidate pixel with means for evaluating the difference between
the amount of already covered pixels in the living area surrounding the at least one uncovered pixel
and
the new amount of covered pixels in the living area surrounding the at least one uncovered pixel, after virtually placing a new base station on the at least one uncovered pixel.

11. System according to claim 10 in which the means for identifying at least one uncovered pixel comprises a coverage prediction model and a population distribution model.

12. System according to claim 10 in which the means for identifying at least one uncovered pixel comprises a measured coverage data and a population distribution model.

13. System according to claim 10 in which the means for identifying at least one uncovered pixel comprises a coverage prediction model and an environment characteristics model.

14. System according to claim 10 in which the means for identifying at least one uncovered pixel comprises a measured coverage data and an environment characteristics model.

15. System according to claims 10-14 in which the system further comprises
means for weighing the at least one uncovered pixel; and the sum of the population of new covered pixels is a weighed sum of new covered pixels.

16. System according to claims 10-15 in which the means for determining the at least one candidate pixel comprises a means for selecting the at least one uncovered pixel for which the sum of the population of new covered pixels is highest.

17. System according to claim 16 in which the means for selecting the at least one uncovered pixel comprises means for evaluating whether or not the sum of the population of new covered pixels is above a threshold value.

**Patentansprüche**

1. Verfahren für die Planung und/oder Bewertung von einem Funknetzwerk, wobei das Funknetzwerk mindestens eine Basisstation umfasst, die mindestens eine Zelle definiert, wobei das Verfahren die Schritte umfasst
des Aufteilens von mindestens einem Teil von mindestens einer Dienstleistungsfläche in Bildpunkte;
des Identifizierens von mindestens einem nicht abgedeckten Bildpunkt durch Bewerten, ob oder ob nicht mindestens einer der Bildpunkte durch mindestens eine Zelle abgedeckt ist;
des Bestimmens einer Summe einer Population von neu abgedeckten Bildpunkten durch eigentliches Platzieren einer neuen Basisstation auf dem mindestens einen nicht abgedeckten Bildpunkt;
des Bestimmens von mindestens einem Kandidaten-Bildpunkt, der von dem mindestens einen nicht abgedeckten Bildpunkt zur Platzierung der neuen Basisstation ausgewählt wird, umfasst
**dadurch gekennzeichnet, dass**
besagtes Verfahren weiterhin die Schritte umfasst:

   des Identifizierens von mindestens einem schon abgedeckten Bildpunkt in einer Wohnfläche, welche den mindestens einen nicht abgedeckten Bildpunkt umgibt, durch Bewertung, ob oder ob nicht der mindestens eine schon abgedeckte Bildpunkt durch die mindestens eine Zelle schon abgedeckt ist;
   des Bestimmens einer Menge von schon abgedeckten Bildpunkten in der Wohnfläche, welche den mindestens einen nicht abgedeckten Bildpunkt umgibt, für den mindestens einen nicht abgedeckten Bildpunkt;
   des Bestimmens einer neuen Menge von abgedeckten Bildpunkten in der Wohnfläche, welche den mindestens einen nicht abgedeckten Bildpunkt umgibt, für den mindestens einen nicht abgedeckten Bildpunkt, nach eigentlicher Platzierung der neuen Basisstation auf dem mindestens einen nicht abgedeckten Bildpunkt;
   des Priorisierens des mindestens eine Kandidaten-Bildpunktes durch Bewertung der Differenz zwischen:

      der Menge von schon abgedeckten Bildpunkten in der Wohnfläche, welche den mindestens einen nicht abgedeckten Bildpunkt umgibt, und
      der neuen Menge von abgedeckten Bildpunkten in der Wohnfläche, die den mindestens einen nicht abgedeckten Bildpunkt umgibt, nach eigentlicher Platzierung einer neuen Basisstation auf dem mindestens einen nicht abgedeckten Bildpunkt.

2. Verfahren gemäss Anspruch 1, in welchem der Schritt des Identifizierens von mindestens einem nicht abgedeckten Bildpunkt ein Abdeckungs-Wahrnehmungs-Modell und ein Populations-Verteilungs-Modell verwendet.

3. Verfahren gemäss Anspruch 1, in welchem der Schritt des Identifizierens von mindestens einem nicht abgedeckten Bildpunkt einen gemessenen Abdeckungsdatensatz und ein Populations-Verteilungs-Modell verwendet.

4. Verfahren gemäss Anspruch 1, in welchem der Schritt des Identifizierens von mindestens einem nicht abgedeckten Bildpunkt ein Abdeckungs-Wahrnehmungs-Modell und ein Umgebungs-Charakteristik-Modell verwendet.

5. Verfahren gemäss Anspruch 1, in welchem der Schritt des Identifizierens von mindestens einem nicht abgedeckten Bildpunkt einen gemessenen Abdeckungsdatensatz und ein Umgebungs-Charakteristik-Modell verwendet.

6. Verfahren gemäss Ansprüchen 1 bis 5, in welchem das Verfahren weiterhin den Schritt des
Gewichtens des mindestens einen nicht abgedeckten Bildpunktes umfasst;
und die Summe der Population des neu abgedeckten Bildpunktes eine gewichtete Summe von neu abgedeckten Bildpunkten ist.

7. Verfahren gemäss Ansprüchen 1 bis 6, in welchem der Schritt des Bestimmens des mindestens einen Kandidaten-Bildpunktes durch Auswählen des mindestens einen nicht abgedeckten Bildpunktes, für welchen die Summe der Population des neu abgedeckten Bildpunktes am höchsten ist, ausgeführt wird.

8. Verfahren nach Anspruch 7, in welchem die Auswahl des mindestens einen nicht abgedeckten Bildpunktes evaluiert, ob oder ob nicht die Summe der Population der neu abgedeckten Bildpunkte über einem Grenzwert ist.

9. Verfahren gemäss einem der Ansprüche 1 bis 8, in welchen das Verfahren weiterhin den Schritt des Platzierens einer realen Basisstation auf dem Kandidaten-Bildpunkt umfasst.

10. Vorrichtung für die Planung und/oder Bewertung von einem Funknetzwerk, wobei das Funknetzwerk mindestens eine Basisstation umfasst, die mindestens eine Zelle definiert, wobei die Vorrichtung umfasst:

Mittel zur Aufteilung von mindestens einem Teil von mindestens einer Dienstleistungs-Fläche in Bildpunkte;
Mittel zur Identifikation von mindestens einem nicht abgedeckten Bildpunkt durch die Bewertung, ob oder ob nicht mindestens einer der Bildpunkte durch mindestens eine Zelle abgedeckt ist;
Mittel zur Bestimmung einer Summe einer Population von neu abgedeckten Bildpunkten durch eigentliche Platzierung einer neuen Basisstation auf dem mindestens einen nicht abgedeckten Bildpunkt;
Mittel zur Bestimmung von mindestens einem Kandidaten-Bildpunkt, der von dem mindestens einen nicht abgedeckten Bildpunkt zur Platzierung der neuen Basisstation ausgewählt wird;

**gekennzeichnet durch**
Mittel zur Identifikation eines mindestens schon abgedeckten Bildpunktes in einer Wohnfläche, welche den mindestens einen nicht abgedeckten Bildpunkt umgibt, und Mittel zur Bewertung, ob oder ob nicht der mindestens eine schon abgedeckte Bildpunkt **durch** die mindestens eine Zelle schon abgedeckt ist;
Mittel zur Bestimmung einer Menge von schon abgedeckten Bildpunkten in der Wohnfläche, welche den mindestens einen nicht abgedeckten Bildpunkt umgibt, für den mindestens einen nicht abgedeckten Bildpunkt;
Mittel zur Bestimmung einer neuen Menge von schon abgedeckten Bildpunkten in der Wohnfläche, welche den mindestens einen nicht abgedeckten Bildpunkt umgibt, für den mindestens einen nicht abgedeckten Bildpunkt, nach der eigentlichen Platzierung der neuen Basisstation auf dem mindestens einen nicht abgedeckten Bildpunkt;
Mittel zur Priorisierung des mindestens einen Kanditaten-Bildpunktes mit Mitteln zur Bewertung der Differenz zwischen
der Menge von schon abgedeckten Bildpunkten in der Wohnfläche, welche den mindestens einen nicht abgedeckten Bildpunkt umgibt, und
der neuen Menge von abgedeckten Bildpunkten in der Wohnfläche, welche den mindestens einen nicht abgedeckten Bildpunkt umgibt, nach eigentlicher Platzierung einer neuen Basisstation auf dem mindestens einen nicht abgedeckten Bildpunkt.

11. Vorrichtung gemäss Anspruch 10, in welcher die Mittel zur Identifikation von mindestens einem nicht abgedeckten Bildpunkt ein Abdeckungs-Wahrnehmungs-Modell und ein Populations-Verteilungs-Modell umfassen.

12. Vorrichtung gemäss Anspruch 10, in welcher die Mittel zur Identifikation von mindestens einem nicht abgedeckten Bildpunkt einen gemessenen Abdeckungsdatensatz und ein Populations-Verteilungs-Modell umfassen.

13. Vorrichtung gemäss Anspruch 10, in welcher die Mittel zur Identifikation von mindestens einem nicht abgedeckten Bildpunkt ein Abdeckungs-Wahrnehmungs-Modell und ein Umgebungs-Charakteristik-Modell umfassen.

14. Vorrichtung gemäss Anspruch 10, in welcher die Mittel zur Identifikation von mindestens einem nicht abgedeckten Bildpunkt einen gemessenen Abdeckungsdatensatz und ein Umgebungs-Charakteristik-Modell umfassen.

15. Vorrichtung gemäss Ansprüchen 10 bis 14, in welcher die Vorrichtung weiterhin
Mittel zur Gewichtung des mindestens einen nicht abgedeckten Bildpunktes umfasst;
und die Summe der Population des neu abgedeckten Bildpunktes eine gewichtete Summe von neu abgedeckten Bildpunkten ist.

16. Vorrichtung gemäss Ansprüchen 10 bis 15, in welcher das Mittel zur Bestimmung des mindestens einen Kandidaten-Bildpunktes ein Mittel zur Auswahl des mindestens einen nicht abgedeckten Bildpunktes, für welchen die Summe der Population des neu abgedeckten Bildpunktes am grössten ist, umfasst.

17. Vorrichtung gemäss Anspruch 16, in welchem das Mittel zur Auswahl des mindestens einen nicht abgedeckten Bildpunktes Mittel zur Bewertung, ob oder ob nicht die Summe der Population des neu abgedeckten Bildpunktes über einem Grenzwert ist, umfasst.

**Revendications**

1. Procédé pour la planification et/ou l'évaluation d'un réseau radio, le réseau radio comprenant au moins une station de base définissant au moins une cellule, le procédé comprenant les étapes consistant à:

   diviser au moins une partie d'au moins une zone de service en pixels ;
   identifier au moins un pixel non couvert en évaluant si, oui ou non, ledit au moins un des pixels est couvert par ladite au moins une cellule ;
   déterminer une somme d'une population de nouveaux pixels couverts en plaçant virtuellement une nouvelle station de base sur ledit au moins un pixel non couvert ;
   déterminer au moins un pixel candidat sélectionné parmi ledit au moins un pixel non couvert pour placer la nouvelle station de base,

   **caractérisé en ce que**
   ledit procédé comprend les étapes consistant à:

   identifier au moins un pixel déjà couvert dans une zone active entourant ledit au moins un pixel non couvert en évaluant si, oui ou non, ledit au moins un pixel déjà couvert est couvert par ladite au moins une cellule ;
   déterminer, pour ledit au moins un pixel non couvert, une quantité de pixels déjà couverts dans la zone active entourant ledit au moins un pixel non couvert ;
   déterminer, pour ledit au moins un pixel non couvert, une nouvelle quantité de pixels couverts dans la zone active entourant ledit au moins un pixel non couvert, après avoir placé virtuellement la nouvelle station de base sur ledit au moins un pixel non couvert ;
   donner la priorité audit au moins un pixel candidat en évaluant la différence entre :

      la quantité de pixels déjà couverts dans la zone active entourant ledit au moins un pixel non couvert, et
      la nouvelle quantité de pixels couverts dans la zone active entourant ledit au moins un pixel non couvert, après avoir placé virtuellement une nouvelle station de base sur ledit au moins un pixel non couvert.

2. Procédé selon la revendication 1, dans lequel l'étape d'identification d'au moins un pixel non couvert utilise un modèle de prédiction de couverture et un modèle de répartition de population.

3. Procédé selon la revendication 1, dans lequel l'étape d'identification d'au moins un pixel non couvert utilise des données de couverture mesurée et un modèle de répartition de population.

4. Procédé selon la revendication 1, dans lequel l'étape d'identification d'au moins un pixel non couvert utilise un modèle de prédiction de couverture et un modèle de caractéristiques d'environnement.

5. Procédé selon la revendication 1, dans lequel l'étape d'identification d'au moins un pixel non couvert utilise des données de couverture mesurée et un modèle de caractéristiques d'environnement.

6. Procédé selon les revendications 1 à 5, dans lequel le procédé comprend en outre l'étape consistant à :

   pondérer ledit au moins un pixel non couvert ;
   et la somme de la population des nouveaux pixels couverts est une somme pondérée de nouveaux pixels couverts.

7. Procédé selon les revendications 1 à 6, dans lequel l'étape de détermination dudit au moins un pixel candidat est effectuée en sélectionnant ledit au moins un pixel non couvert pour lequel la somme de la population des nouveaux pixels couverts est la plus grande.

8. Procédé selon la revendication 7, dans lequel la sélection dudit au moins un pixel non couvert évalue si, oui ou non, la somme de la population des nouveaux pixels couverts est supérieure à une valeur de seuil.

9. Procédé selon l'une quelconque des revendications 1 à 8, dans lequel le procédé comprend en outre l'étape de placement d'une station de base réelle sur le pixel candidat.

10. Système pour la planification et/ou l'évaluation d'un réseau radio, le réseau radio comprenant au moins une station de base définissant au moins une cellule, le système comprenant :

des moyens pour diviser au moins une partie d'au moins une zone de service en pixels ;

des moyens pour identifier au moins un pixel non couvert en évaluant si, oui ou non, ledit au moins un des pixels est couvert par ladite au moins une cellule ;

des moyens pour déterminer une somme d'une population de nouveaux pixels couverts en plaçant virtuellement une nouvelle station de base sur ledit au moins un pixel non couvert ;

des moyens pour déterminer au moins un pixel candidat sélectionné parmi ledit au moins un pixel non couvert pour placer la nouvelle station de base,

**caractérisé par**

des moyens pour identifier au moins un pixel déjà couvert dans une zone active entourant ledit au moins un pixel non couvert et des moyens pour évaluer si, oui ou non, ledit au moins un pixel déjà couvert est couvert par ladite au moins une cellule ;

des moyens pour déterminer, pour ledit au moins un pixel non couvert, une quantité de pixels déjà couverts dans la zone active entourant ledit au moins un pixel non couvert ;

des moyens pour déterminer, pour ledit au moins un pixel non couvert, une nouvelle quantité de pixels couverts dans la zone active entourant ledit au moins un pixel non couvert, après avoir placé virtuellement la nouvelle station de base sur ledit au moins un pixel non couvert ;

des moyens pour donner la priorité audit au moins un pixel candidat par des moyens pour évaluer la différence entre :

la quantité de pixels déjà couverts dans la zone active entourant ledit au moins un pixel non couvert, et

la nouvelle quantité de pixels couverts dans la zone active entourant ledit au moins un pixel non couvert, après avoir placé virtuellement une nouvelle station de base sur ledit au moins un pixel non couvert.

**11.** Système selon la revendication 10, dans lequel les moyens pour identifier au moins un pixel non couvert comprennent un modèle de prédiction de couverture et un modèle de répartition de population.

**12.** Système selon la revendication 10, dans lequel les moyens pour identifier au moins un pixel non couvert comprennent des données de couverture mesurée et un modèle de répartition de population.

**13.** Système selon la revendication 10, dans lequel les moyens pour identifier au moins un pixel non couvert comprennent un modèle de prédiction de couverture et un modèle de caractéristiques d'environnement.

**14.** Système selon la revendication 10, dans lequel les moyens pour identifier au moins un pixel non couvert comprennent des données de couverture mesurée et un modèle de caractéristiques d'environnement.

**15.** Système selon les revendications 10 à 14, dans lequel le système comprend en outre:

des moyens pour pondérer ledit au moins un pixel non couvert ;

et la somme de la population des nouveaux pixels couverts est une somme pondérée de nouveaux pixels couverts.

**16.** Système selon les revendications 10 à 15, dans lequel les moyens pour déterminer ledit au moins un pixel candidat comprennent des moyens pour sélectionner ledit au moins un pixel non couvert pour lequel la somme de la population des nouveaux pixels couverts est la plus grande.

**17.** Système selon la revendication 16, dans lequel les moyens pour sélectionner ledit au moins un pixel non couvert comprennent des moyens pour évaluer si, oui ou non, la somme de la population des nouveaux pixels couverts est supérieure à une valeur de seuil.

n44_prediction    IF...THEN...ELSE    n45_urban_suburban

n46_indoor_gaps    IF...THEN...ELSE    n48_population

n7_weighted_indoor_gaps

n8_Custom_Integer    FOCAL SUM    n23_Custom_Integer

n14_focalsum_of_gaps    FOCAL MAX

IF...THEN...ELSE    n26_focalmax_of_gaps

n27_local_peaks    CLUMP    n29_searchrings

Fig.1

**n44_prediction**
-60 dBm
-70 dBm
-80 dBm **Fig.2**
-90 dBm

**n46_indoor_gaps**
☐ covered
■ uncovered

**Fig.3**

**n7_weighted_indoor_gaps**
>0 inh.
>20 inh.
>50 inh.
>100 inh. **Fig.4**

**n14_focalsum_of_gaps**
>0 inh.
>500 inh.
>1000 inh.
>3000 inh. **Fig.5**

**n26_focalmax_of_gaps**

>0 inh.
>500 inh.
>1000 inh.
>3000 inh.

Fig.6

**n27_local_peaks**

=1022 inh.
=1440 inh.
=1456 inh.
=5504 inh.

Fig.7

**Raster Attribute Editor - searchrings.img (Layer 1)**

File    Edit                                                          Help

Layer Number: 1

| Row | Original Value | X Map | Y Map | Histogram | Color |
|---|---|---|---|---|---|
| 0 | 0 | 4.57873e+06 | 5.81416e+06 | 1246 | |
| 1 | 1440 | 4.58003e+06 | 5.81256e+06 | 10 | |
| 2 | 5504 | 4.57903e+06 | 5.81146e+06 | 1 | |
| 3 | 1022 | 4.58073e+06 | 5.81106e+06 | 1 | |
| 4 | 1456 | 4.58173e+06 | 5.81106e+06 | 2 | |

Save changes to file

Fig.8

17

n1_road_type  n2_population  n3_prediction

Block 1  Block 2

IF...THEN...ELSE  n13_urban_suburban  IF...THEN...ELSE

Block 3  Block 4

n7_analysis_good  FOCAL SUM  n8_Custom_Integer  FOCAL SUM  n5_analysis_bad

Block 5

n12_sum_good  IF...THEN...ELSE  n11_sum_bad

n15_perceived_coverage

Fig.9

**EP 1 482 749 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9010342 A
- WO 9636188 A
- EP 1294208 A
- WO 9315591 A